# Europäisches Patentamt
# European Patent Office
# Office européen des brevets

(19)

(11) Numéro de publication: **0 028 720**
**B1**

(12) **FASCICULE DE BREVET EUROPEEN**

(45) Date de publication du fascicule du brevet: **30.11.83**

(51) Int. Cl.³: **C 09 D 11/00**

(21) Numéro de dépôt: **80106258.9**

(22) Date de dépôt: **15.10.80**

---

(54) **Composition d'encre.**

---

(30) Priorité: **07.11.79 US 92254**

(43) Date de publication de la demande:
**20.05.81 Bulletin 81/20**

(45) Mention de la délivrance du brevet:
**30.11.83 Bulletin 83/48**

(84) Etats contractants désignés:
**DE FR GB IT**

(56) Documents cités:
**DE - B - 2 654 984**
**GB - A - 1 551 324**
**US - A - 4 136 076**
**US - A - 4 155 768**

(73) Titulaire: **International Business Machines**
**Corporation**
**Old Orchard Road**
**Armonk, N.Y. 10504 (US)**

(72) Inventeur: **Edds, Kenneth Eugene**
**Route 4**
**Versailles, Kentucky 40383 (US)**
Inventeur: **Eisele, Peter Jon**
**2049 St. Teresa Dr.**
**Lexington, Kentucky 40502 (US)**
Inventeur: **Elbert, Donald Leo**
**601 Lake Clair Ct.**
**Lexington, Kentucky 40502 (US)**

(74) Mandataire: **Vekemans, André**
**COMPAGNIE IBM FRANCE Département de**
**Propriété Industrielle**
**F-06610 La Gaude (FR)**

---

Courier Press, Leamington Spa, England.

### Description
### Domaine technique

La présente invention concerne des compositions d'encre aqueuses qui présentent une bonne résistance à l'eau sans pour autant exiger la présence d'un liant résineux, et, plus particulièrement, des compositions d'encre aqueuses utilisables dans des imprimantes du type à projection d'encre.

### Etat de la Technique Antérieure L'impression par projection d'encre nécessite en principe l'emploi d'au moins une buse d'éjection d'encre reliée à une source d'encre, laquelle est maintenue à une pression déterminée. Chaque buse comporte un orifice d'éjection d'encre présentant généralement un diamètre compris entre 0,013 et 0,071 mm, et qui est excité au moyen d'un transducteur électromécanique de manière à engendrer une suite ininterrompue de gouttelettes d'encre généralement uniformes à une fréquence comprises entre 20 et 200 kHz environ. Cette suite de gouttelettes est dirigée vers la surface d'un support d'impression mobile, tel qu'une feuille de papier, et est commandée de manière à former sur ce support les caractères désirés en répose à des signaux vidéo fournis par un générateur électronique de caractères et à un dispositif électrostatique de déviation. Une charge est impartie à chaque gouttelette d'encre en réponse à un signal reçu par l'imprimante. Les gouttelettes passent ensuite entre deux plaques conductrices parallèles auxquelles est appliqué un potentiel de polarisation de manière à créer un champ de déviation permettant de dévier les gouttelettes vers le support d'impression. Les caractères ainsi imprimés sont fonction des informations représentées par les signaux transmis à l'imprimante.

Dans une telle imprimante, l'encre est généralement contenue dans un réservoir et transmise, par l'intermédiaire d'un compresseur et d'une conduite, à une buse. Un transducteur électromécanique fait vibrer cette dernière à une fréquence élevée, ce qui a pour effet de provoquer la division du jet d'encre sortant de la buse en un certain nombre de gouttes. Afin que la charge requise puisse être correctement impartie aux différentes gouttelettes, il est nécessaire que la division du jet se produise au point où la charge doit effectivement être impartie à une gouttelette donnée.

L'encre utilisée dans une telle imprimante doit présenter un certain nombre de caractéristiques ou de propriétés importantes. Par exemple, elle doit avoir une viscosité appropriée. Celle-ci varie entre 0.001 et 0.01 Pa.s à 24°C, et de préférence entre 0.002 et 0.006 Pa.s à 24°C. Ces valeurs peuvent varier quelque peu en fonction de la configuration particulière de l'imprimante utilisée.

Par ailleurs, l'obstruction éventuelle de la buse, comptetenu du faible diamètre de son orifice de sortie, peut constituer un problème important. Il est donc nécessaire que l'encre employée ne contienne aucune matière susceptible de provoquer une telle obstruction. Il est également nécessaire que l'encre ne sèche pas lorsque la machine n'est pas en fonction, car il pourrait en résulter une obstruction de l'orifice de sortie de la buse. Il faut d'autre part une l'encre employée soit électriquement conductrice, qu'elle puisse sécher relativement vite et qu'elle puisse être facilement absorbée par le support d'impression de manière à éviter la formation de taches sur ce dernier.

Les encres actuellement disponibles qui peuvent être utilisées dans de telles imprimantes contiennent un agent de liaison constitué par une résine organique et qui permet de lier le colorant au substrat. On a cru nécessaire d'employer à cette fin une résine synthétique. A titre d'exemple, le brevet des E.U.A. No. 4 136 076 décrit une encre dont on augmente l'adhérence à la surface du support d'impression en lui incorporant certains polymères contenant des groupes carbonyles libres non estérifiés et certains métaux multivalents de façon à obtenir une réticulation du polymère. Ce même brevet préconise l'emploi de certaines bases volatiles, y compris l'hydroxyde d'ammonium, pour rendre les polymères solubles dans l'eau ou dans l'alcool.

D'autre part, le brevet des E.U.A. No. 3 891 581 décrit une composition d'encre soluble dans l'eau et utilisable aux fins de procédés d'impression flexographiques ou en rotogravure, qui contient une résine thermoplastique telle qu'un polyester obtenu en faisant réagir de la colophane, partiellement estérifiée au moyen d'un poly-alcool, avec l'anhydride maléique et/ou l'acide fumarique. Ces compositions peuvent contenir de l'hydroxide d'ammonium, si bien que leur pH varie entre 8 et 9 environ.

Le brevet des E.U.A. No. 4 150 997 décrit certaines bases utilisées dans des compositions d'encre contenant un pigment fluorescent. Ce dernier est une combinaison d'un colorant et d'une résine organique cuite (cf. colonne 2, ligne 20 à 23, et colonne 3, lignes 12 et 13 de ce dernier brevet). Ladite base est ajoutée à la composition afin de solubiliser le pigment. Par exemple, cette base peut être constituée par de l'hydroxyde d'ammonium qui, selon ledit brevet, forme un sel quaternaire avec le pigment fluorescent.

Le brevet des E.U.A. No. 3 846 141 concerne des compositions d'encre pouvant contenir une base tel qu'un alcanolamine, un hydroxyde monovalent tel qu'un hydroxyde de métal alcalin, un hydroxyde d'ammonium ou de la morpholine afin que le pH de la composition soit légèrement supérieur à 9. environ. Selon ce dernier brevet, ladite base permet de modifier la composition en incorporant à cette dernière un système résineux tel qu'une résine styrène-anhydride maléique modifiée (cf. colonne 3, lignes 53 et seq.).

Par ailleurs, il convient de mentionner ici le brevet des E.U.A. No. 3 994 736, auquel on se reportera utilement.

### Exposé de l'Invention

Contrairement aux techniques de l'art antérieur, la présente invention n'exige pas la présence d'un agent de liaison résineux pour rendre le colorant résistant à l'eau. Selon la présente invention, on ajuste le pH de la composition en incorporant à celle-ci de l'hydroxyde d'ammonium grâce auquel le colorant reste dissous tant que l'encre se trouve dans une bouteille ou dans un réservoir, mais s'évapore une fois qu'elle se trouve sur le substrat, réduisant ainsi le pH de la composition et rendant l'encre insoluble une fois qu'elle se trouve sur le papier. Selon la présente invention, il est inutile d'employer un liant résineux pour obtenir l'équilibre requis du pH et une résistance adéquate à l'eau, ainsi qu'on le croyait jusqu'à présent.

La présente invention concerne une composition d'encre qui se compose essentiellement d'une solution aqueuse d'un colorant direct organique et d'hydroxyde d'ammonium. La composition comporte une quantité suffisante d'hydroxyde d'ammonium pour que son pH soit égale à au moins 9,5. D'autre part, cette solution aqueuse ne comporte aucun agent de liaison résineux insoluble dans l'eau à un pH égal ou inférieur à 7.

### Brève Description de la Figure

La Figure unique est un graphique représentant la résistance à l'eau de l'encre des exemples 5 et 6 cités ci-après.

### Modes de Réalisation de l'Invention

Selon la présente invention, il est indispensable que le pH de la solution aqueuse résulte de l'addition à celle-ci, comme élément basique, de l'hydroxyde d'ammonium. Ainsi qu'on a pu le constater, l'emploi d'autres éléments basiques tels que l'hydroxyde de sodium et le carbonate de sodium ne permet pas d'obtenir la même résistance à l'eau que dans le cas de la présente invention sans l'addition d'un liant résineux synthétique. D'autre part, l'addition d'autres bases volatiles telle que le carbonate d'ammonium ou la morpholine ne permet pas d'obtenir les résultats désirés qui résultent de l'emploi d'hydroxyde d'ammonium. Le pH de la solution doit être d'au moins 9,5 et de préférence d'au moins 10, sans cependant dépasser 12. La composition contient généralement de 0,05% à 5% en poids d'hydroxyde d'ammonium, et de préférence de 0,01% à 3% en poids d'hydroxyde d'ammonium, pour obtenir le pH requis.

Par ailleurs, la composition doit contenir un colorant constitué par un ou plusieurs colorants directs organiques. Les colorants employés doivent être solubles dans l'eau à un pH égal ou supérieur à 9,5 environ, mais être pratiquement insolubles à un pH égal ou inférieur à 7. Par exemple, les colorants connus sous les appelations "Direct Blue" 1 et "Direct Black" 80, qui sont solubles à un pH égal ou inférieur à 7, ne présentent pas de résistance à l'eau lorsqu'ils sont combinés avec de l'hydroxyde d'ammonium sans utilisation d'un agent de liaison résineux.

L'emploi de pigments ou d'autres matières analogues n'est pas souhaitable étant donné qu'elles peuvent provoquer une obstruction des buses d'éjection d'encre, dont les orifices de sortie sont de très faible diamètre. Les colorants que l'on utilisera de préférence dans le cadre de la présente invention sont les colorants directes disponibles dans le commence et qui contiennent généralement un sel inorganique ionisable, par exemple des sels de Glauber, ou du chlorure de sodium, qui a été ajouté pendant la fabrication afin de standardiser un lot de colorants. Le matériau inorganique rend donc le colorant conducteur, si bien que les gouttelettes d'encre peuvent être déviées par un champ électromagnétique en cours d'impression. Ces colorants directs sont bien connus de l'homme de l'art et sont disponibles dans le commerce; il peut s'agir, par exemple, des colorants "Direct Black" 38, 19 ou 163; "Direct Blue" 106; "Food Black" 2. Le "Direct Black" 19 est le colorant dont on se servira de préférence. On a constaté que les colorants "Direct Black" 19, "Direct Black" 38 et "Amanil-P" présentaient une excellente résistance à l'eau lorsqu'ils étaient utilisés avec le l'hydroxyde d'ammonium. En revanche, seule une légère amélioration de la résistance à l'eau a pu être obenue, dans les mêmes conditions, dans le cas de certains autres colorants directs tels que le "Direct Blue" 106, le "Direct Black" 163 et le "Food Black" 2.

Le colorant est généralement présent dans la composition à raison de 0,05% à 8% en poids, et de préférence de 2% à 5% en poids. On notera d'autre part que l'eau employée doit être de préférence de l'eau distillée ne contenant pratiquement pas d'ions et pouvant être considérée comme de l'eau déionisée.

Les compositions peuvent également contenir des éléments auxiliaires tels que des agents humidifiant, des fongicides et des stabilisants ou des solubilisants.

Les humectants convenables comprennent le glycol et ses dérivés, tels que les glycols de polyacènes (notamment les polyéthylène glycols et les polypropylène glycols), le propylène glycol, les alcoyle-ethers inférieurs d'éthylène glycol ou de diéthylène glycol (par exemple le monométhyléther d'éthylène glycol, le monométhyl-éther d'éthylène glycol, le monométhyl éther de diéthylène glycol, le monométhyl-éther de diéthylène glycol et le monobutyl-éther d'éthylène glycol); et la glycérine. Lorsqu'il est utilisé, l'humectant peut généralement être présent dans la composition à raison de 5% à 45% en poids. Les humectants ont pour objet de retarder le séchage de l'encre afin d'éviter que celle-ci ne sèche prématurément dans les capillaires et autres parties de l'imprimante à projection d'encre.

Les agents de solubilisation employés comprennent, par exemple, ceux mentionnés dans le brevet des E.U.A. No. 3 846 141, tel que la N-méthyl-2-pyrrolidone; le sulfure de $\beta,\beta$-dihydroxyéthyle, la N-vinyl pyrrolidone, la pyrrolidone substituée, telle que le composé connu sous le nom de "Solvofen HM", la 4-méthoxy-4 méthyl pentanone-2 et l'alcool-tétrahydro-furfurylique. L'agent de solubilisation est généralement employé à raison de 5% environ en poids au maximum et de préférence à raison de 0,5% à 4% environ en poids au maximum, selon le poids total de la composition d'encre.

Par ailleurs, la composition d'encre peut comprendre un agent de préservation destiné à empêcher la prolifération des bactéries en cours de stockage, particulièrement lorsque les compositions doivent être stockées pendant des intervalles de temps considérables. Les bactéries pourraient en effet obstruer l'orifice de la buse d'éjection d'encre si l'on n'évitait pas leur prolifération. On peut utiliser à cette fin, par exemple, l' "Omadine" sous forme de sel de sodium (Omadine est une marque déposée par la société Olin Chemicals pour une série de dérivés de la Pyridinéthione telle que la 1-hydroxy-2-pyridinéthione), et le 6-acétoxy-2, 4-diméthyle-m dioxane. Ces agents sont généralement utilisés à raison d'1% environ en poids, au maximum.

La composition peut également contenir un agent de chélation, tel que le sel tétrasodique, de l'acide éthylènediamine tétraacétique, généralement appelé dans la littérature anglosaxonne EDTA. Les agents de chélation permettent de complexer les ions de métaux tels que le fer, le zinc ou le magnésium présents dans la composition aqueuse afin d'éviter la précipitation des ions de métaux dissous dans l'eau ou présents dans la composition avec le colorant. L'agent de chélation est généralement employé à raison de 5% environ en poids au maximum et de préférence à raison de 0,05% à 0,5% environ en poids.

Il est souhaitable que les compositions de la présente invention présentent une viscosité comprise entre 0.001 et 0.01 Pa.s à 24°C, et de préférence entre 0.002 et 0.006 Pa.s à 24°C.

Les compositions de la présente invention peuvent être préparées en mélangeant complètement ses composants pour obtenir une dissolution complète du colorant, puis en procédant à un filtrage pour éliminer toutes les particules, constituées, par exemple, par des parties non dissoutes du colorant ou résultant d'une contamination, qui seraient susceptibles d'obstruer l'orifice de sortie de la buse de l'imprimante. D'une façon générale, il est préférable de filtrer les compositions de la présente invention afin d'éliminer les particules présentant un diamètre supérieur à 2 microns environ, et de préférence supérieur à 1 micron environ, afin d'éviter toute obstruction de la buse.

Conformément à la technique préférée de préparation des compositions de la présente invention, on mélange tout d'abord l'eau, l'hydroxyde d'ammonium et, éventuellement, l'agent humidifiant et l'agent de solubilisation, de manière à éviter l'introduction d'air dans le mélange ou la formation d'une mousse. Après obtention d'un mélange uniforme, on ajoute lentement à celui-ci l'agent de préservation, si ce dernier est employé, et on continue à agiter l'ensemble jusqu'à ce qu'un mélange uniforme soit obtenu. On introduit ensuite lentement, au moyen d'un tamis, le colorant organique dans le mélange tout en continuant à agiter ce dernier de manière à assurer une dissolution pratiquement complète du colorant dans la solution aqueuse. On procède ensuite à un filtrage de la composition de manière à éliminer toutes les particules présentant un diamètre supérieur au diamètre maximum désiré.

Dans les exemples donnés ci-après, les quantités sont des quantités en poids, sauf indication contraire.

### Exemple 1

On ajoute, tout en remuant, 10 grammes environ d'une solution à 30% d'hydroxyde d'ammonium, 100 grammes environ du composé connu sous le nom de "Carbowax" 200 (c'est-à-dire de polyéthylène glycol), et 32,5 grammes environ de colorant "Direct Black" 19 à 857,5 grammes environ d'eau déionisée maintenue à une température de 22°C. On remue cette solution pendant quatre heures environ à température ambiante, puis on la filtre au moyen d'un filtre comportant une membrane de 0,45 micron. L'encre ainsi obtenue présente une excellente résistance à l'eau lorsqu'elle est appliquée sur une vaste gramme de types de papier au moyen d'une technique d'impression par projection d'encre.

### Exemple 2

On procède de la même façon que dans le cas de l'exemple 1, mais la composition de l'encre diffère comme suit:

| | |
|---|---|
| Colorant "Direct Black" 19 | 8,0 % |
| NH₄OH (solution à 30%) | 4,5 % |
| "Carbowax" 200 | 10,0 % |
| H₂O | 77,5 % |

Les résultats obtenus sont analogues à ceux de l'exemple 1.

#### Exemple 3

On procède de la même façon que dans le cas de l'exemple 1, mais la composition de l'encre diffère comme suit:

| | |
|---|---|
| Colorant "Direct Black" 19 | 0,5 % |
| NH$_4$OH (solution à 30%) | 0,5 % |
| "Carbowax" 200 | 10,0 % |
| H$_2$O | 89,0 % |

Les résultats obtenus sont analogues à ceux de l'exemple 1.

#### Exemple 4

On procède de la même façon que dans le cas de l'exemple 1, mais la composition de l'encre diffère comme suit:

| | |
|---|---|
| Colorant "Direct Black" 38 | 3,25 % |
| NH$_4$OH (solution à 30%) | 1,1 % |
| "Carbowax" 200 | 10,0 % |
| H$_2$O | 85,65 % |

Les résultats obtenus sont analogues à ceux de l'exemple 1.

#### Exemple 5

On procéde de la même façon que dans le cas de l'exemple 1, mais la composition de l'encre comporte 3,25% environ du colorant "Direct Black" 19; 10% environ de "Carbowax" 200; 4% environ de N-méthyl-2-pyrrolidone; 0,1% environ d' "Omadine" de sodium; et 0,2% du sel tétrasodique de l'acide éthylènediamine tétraacétique; le reste étant constitué par de l'eau déionisée et de l'hydroxyde d'ammonium de manière à obtenir un pH de 10,2. Les résultats obtenus sont analogues à ceux de l'exemple 1.

Sur le graphique, la ligne pointillée indique la résistance à l'eau déterminée au moyen d'un spectrophotomètre en mesurant l'absorption de l'eau mise en contact avec une feuille sur laquelle un texte a préalablement été imprimé en utilisant l'encre du présent exemple. Comme on peut le constater, la quantité d'encre détachée de la feuille pendant ce test est pratiquement nulle.

#### Exemple 6

Cet exemple est identique à l'exemple 5, à l'exception du fait que l'on remplace l'hydroxyde d'ammonium par 0,15% environ d'hydroxyde de sodium et par 0,1% à 0.2% de carbonate de sodium de manière à conférer à la solution un pH de 10,2. Sur le graphique, la ligne continue indique la résistance à l'eau de cette encre. Une comparaison entre les résultats indiqués sur le graphique relativement à l'encre du présent exemple et à celle de l'exemple 5 montre clairement qu'il existe une différence importante entre les résistances à l'eau que présentent respectivement ces deux encres, celle de la présente invention étant nettement supérieure.

Les tests afférents aux exemples 5 et 6 ont été effectués dans les conditions suivantes:

température : 23°C environ;
humidité relative : 39% environ;
diamètre de l'orifice de sortie de la buse : 0,032 mm environ;
diamètre d'une gouttelette d'encre : 0,062 mm;
distance (lambda) entre gouttelettes: 0,154 mm;
fréquence : 100 kHz;
pression : $2.25 \cdot 10^5$ Pa
espacement de la matrice : 0,106 mm.

Bien que l'on ait décrit dans ce qui précède et représenté sur le dessin les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

## Revendications

1. Composition d'encre électriquement conductrice ayant une viscosité comprise entre 0.001 et 0.01 Pa.s, caractérisée en ce qu'elle comporte essentiellement une solution aqueuse d'un colorant direct organique soluble dans l'eau si son pH est compris entre 9,5 et 12, mais pratiquement insoluble si son pH est égal ou inférieur à 7, et de l'hydroxyde d'ammonium.

2. Composition d'encre selon la revendication 1, caractérisée en ce que le pH de ladite solution est compris entre 10 et 12.

3. Composition d'encre selon la revendication 1 ou 2, caractérisée en ce que la quantité d'hydroxyde d'ammonium varie de 0,05% à 5% environ en poids.

4. Composition d'encre selon l'une des revendications 1 à 3, caractérisée en ce que ledit colorant est choisi dans le groupe constitué par les colorants connus sous l'appellation "Direct Black" 38, "Direct Black" 19.

5. Composition d'encre selon l'une des revendications 1 à 4, caractérisée en ce qu'elle contient de 0,5% à 8% environ en poids dudit colorant.

6. Composition d'encre selon l'une des revendications 1 à 5, caractérisée en ce qu'elle contient en outre un agent humidifiant.

7. Composition d'encre selon la revendication 6, caractérisée en ce que ledit agent humidifiant est un glycol ou un glycol de polyalcènes ou un mélange de ceux-ci.

8. Composition d'encre selon la revendication 7, caractérisée en ce que la quantité dudit agent humidifiant présent dans celle-ci varie de 5% à 45% environ en poids.

9. Composition d'encre selon l'une des revendications 1 à 8, caractérisée en ce qu'elle contient une quantité ne dépassant pas 5% environ en poids d'un agent de solubilisation.

10. Composition d'encre selon la revendication 9, caractérisée en ce que ledit agent de solubilisation est présent dans celle-ci à raison de 0,5% à 4% en poids.

11. Composition d'encre selon la revendication 10, caractérisée en ce que ledit agent de solubilisation est la N-méthyl-2-pyrrolidone.

12. Composition d'encre selon l'une des revendications 1 à 11, caractérisée en ce qu'elle contient également un agent de préservation.

13. Composition d'encre selon l'une des revendications 1 à 11, caractérisée en ce qu'elle contient un agent de chélation à raison de 0,05% à 0,5% environ en poids.

14. Composition d'encre selon la revendication 13, caractérisée en ce que ledit agent de chélation est le sel tétrasodique de l'acide éthylènediamine tétraacétique.

## Patentansprüche

1. Elektrisch leitende Tintenzusammensetzung mit einer Viskosität von 0,001 bis 0,01 Pa.s, dadurch gekennzeichnet, daß sie im wesentlichen aus einer wässrigen Lösung eines organischen Direktfarbstoffs, der wasserlöslich ist, wenn der pH-Wert der Lösung zwischen 9,5 und 12 liegt, jedoch praktisch unlöslich ist, wenn der pH-Wert gleich oder kleiner als 7 ist, und Ammoniumhydroxid besteht.

2. Tintenzusammensetzung nach Anspruch 1, dadurch gekennzeichnet, daß der pH-Wert der genannten Lösung zwischen 10 und 12 liegt.

3. Tintenzusammensetzung nach Anspruch 1 oder 2, dadurch gekennzeichnet, daß die Ammoniumhydroxidmenge zwischen ungefähr 0,05 und 5 Gew.-% liegt.

4. Tintenzusammensetzung nach einem der Ansprüche 1 bis 3, dadurch gekennzeichnet, daß der genannte Farbstoff aus der Gruppe der unter der Bezeichnung "Direktschwarz" 38 und "Direktschwarz" 19 bekannten Farbstoffe gewählt wird.

5. Tintenzusammensetzung nach einem der Ansprüche 1 bis 4, dadurch gekennzeichnet, daß sie ungefähr 0,5 bis 8 Gew.-% des genannten Farbstoffes enthält.

6. Tintenzusammensetzung nach einem der Ansprüche 1 bis 5, dadurch gekennzeichnet, daß sie außerdem ein Netzmittel enthält.

7. Tintenzusammensetzung nach Anspruch 6, dadurch gekennzeichnet, daß das genannte Netzmittel ein Glykol oder ein Polyalkylenglykol oder eine Mischung aus beiden ist.

8. Tintenzusammensetzung nach Anspruch 7, dadurch gekennzeichnet, daß die Menge des genannten Netzmittels zwischen ungefähr 5 und 45 Gew.-% liegt.

9. Tintenzusammensetzung nach einem der Ansprüche 1 bis 8, dadurch gekennzeichnet, daß sie einen Lösungsvermittler in einer Menge enthält, die ungefähr 5 Gew.-% nicht überschreitet.

10. Tintenzusammensetzung nach Anspruch 9, dadurch gekennzeichnet, daß die Menge des genannten Lösungsvermittlers zwischen 0,5 und 4 Gew.-% liegt.

11. Tintenzusammensetzung nach Anspruch 10, dadurch gekennzeichnet, daß der genannte Lösungsvermittler N-Methyl-2-pyrrolidon ist.

12. Tintenzusammensetzung nach einem der Ansprüche 1 bis 11, dadurch gekennzeichnet, daß sie ein Konservierungsmittel enthält.

13. Tintenzusammensetzung nach einem der Ansprüche 1 bis 11, dadurch gekennzeichnet, daß sie einen Chelatbildner in einer Menge zwischen ungefähr 0,05 und 0,5 Gew.-% enthält.

14. Tintenzusammensetzung nach Anspruch 13, dadurch gekennzeichnet, daß der Chelatbildner das Tetranatriumsalz der Ethylendiamintetraes-sigsäure ist.

## Claims

1. Electrically conducting ink composition having a viscosity of between 0.001 and 0.01 Pa.s, characterized in that it comprises basically an aqueous solution of an organic direct dye soluble in water if its pH is between 9.5 and 12, but practically insoluble if its pH is 7 or less, and ammonium hydroxide.

2. Ink composition according to claim 1, characterized in that the pH of said solution is between 10 and 12.

3. Ink composition according to claim 1 or 2, characterized in that the quantity of ammonium hydroxide varies approximately from 0.05% to 5% by weight.

4. Ink composition according to one of the claims 1 to 3, characterized in that said dye is taken from the group of dyes known as "Direct Black" 38, "Direct Black" 19.

5. Ink composition according to one of the claims 1 to 4, characterized in that it contains approximately 0.5% to 8% by weight of said dye.

6. Ink composition according to one of the claims 1 to 5, characterized in that it also contains a wetting agent.

7. Ink composition according to claim 6, characterized in that said wetting agent is a glycol or a polyalkene glycol or a mixture thereof.

8. Ink composition according to claim 7, characterized in that the quantity of said wetting agent present in said composition varies approximately from 5% to 45% by weight.

9. Ink composition according to one of the claims 1 to 8, characterized in that it contains a quantity of solubilizing agent not exceeding approximately 5% by weight.

10. Ink composition according to claim 9, characterized in that the quantity of solubilizing agent present in the composition is between 0.5% and 4% by weight.

11. Ink composition according to claim 10, characterized in that said solubilizing agent is N-methyl-2-pyrrolidone.

12. Ink composition according to one of the claims 1 to 11, characterized in that it also contains a preserving agent.

13. Ink composition according to one of the claims 1 to 11, characterized in that it contains a quantity of approximately 0.05% to 0.5% by weight of chelating agent.

14. Ink composition according to claim 13, characterized in that said chelating agent is the tetrasodic salt of ethylenediamine-tetraacetic acid.